# EUROPEAN PATENT APPLICATION

(11) **EP 4 286 769 A1**
(43) Date of publication of application: **06.12.2023**
(21) Application number: 22746049.0
(22) Date of filing: 28.01.2022
(51) Int. Cl.: F25B 1/00, C09K 5/04

(54) **REFRIGERANT-CONTAINING COMPOSITION, USE THEREOF, REFRIGERATOR HAVING SAID COMPOSITION, AND METHOD FOR OPERATING SAID REFRIGERATOR**

(30) Priority: 29.01.2021 JP 2021013655; 10.09.2021 JP 2021148106; 04.10.2021 JP 2021163683
(71) Applicant: DAIKIN INDUSTRIES, LTD., Osaka-shi, Osaka 530-0001 (JP)
(72) Inventor: ITANO, Mitsushi, Osaka-shi, Osaka 530-0001 (JP); OHKUBO, Shun, Osaka-shi, Osaka 530-0001 (JP); TOKUNO, Satoshi, Osaka-shi, Osaka 530-0001 (JP); GOTOU, Tomoyuki, Osaka-shi, Osaka 530-0001 (JP); YOSHIMURA, Takashi, Osaka-shi, Osaka 530-0001 (JP); USUI, Takashi, Osaka-shi, Osaka 530-0001 (JP); TSUCHIYA, Tatsumi, Osaka-shi, Osaka 530-0001 (JP); NAKAUE, Tsubasa, Osaka-shi, Osaka 530-0001 (JP)
(74) Representative: Hoffmann Eitle
(86) International application number: PCT/JP2022/003424
(87) International publication number: WO 2022/163830

(57) **Abstract**

The present invention aims to provide a novel refrigerant comprising HFO-1132(E). As a solution for the problem, the invention provides a composition comprising a refrigerant, the refrigerant comprising HFO-1132(E), R32, and R1234yf.

## Description

### Technical Field

The present disclosure relates to a composition comprising a refrigerant, use of the composition, a refrigerating machine comprising the composition, and a method for operating the refrigerating machine.

### Background Art

A working medium containing 1,2-difluoroethylene (HFO-1132) has been proposed (Patent Literature (PTL) 1).

### Citation List

### Patent Literature

PTL 1: WO2012/157765

### Summary of Invention

### Technical Problem

A problem to be solved by the present disclosure is to suppress disproportionation at a refrigerant pressure of 3.0 MPa in a refrigerant comprising HFO-1132(E). In another embodiment, a problem to be solved by the present disclosure is to provide a novel refrigerant comprising HFO-1132(E).

### Solution to Problem

Item 1. A method for suppressing a disproportionation reaction of HFO-1132(E),
   the method comprising operating a refrigeration cycle using a composition comprising a refrigerant, the refrigerant comprising trans-1,2-difluoroethylene (HFO-1132(E)), difluoromethane (R32), and 2, 3, 3, 3-tetrafluoro-1-propene (R1234yf),
      wherein
   when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines QR, RP, PO, and OQ that connect the following 4 points:
      point Q (54.0, 46.0, 0.0),
      point R (44.0, 0.0, 56.0),
      point P (0.0, 0.0, 100.0), and
      point O (0.0, 100.0, 0.0),
      or on the straight line QR (excluding point Q and point R) .
Item 2. A composition comprising a refrigerant, the refrigerant comprising HFO-1132(E), R32, and R1234yf,
   wherein
   when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines MK, KL, LN, and NM that connect the following 4 points:
   point M (19.8, 41.2, 39.0),
   point K (19.8, 37.7, 42.5),
   point L (12.2, 44.2, 43.6), and
   point N (14.7, 44.2, 41.1),
   or on the straight lines MK, KL, LN, and NM.
Item 3. A composition comprising a refrigerant, the refrigerant comprising HFO-1132(E), R32, and R1234yf,
   wherein
   when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines I"K", K"L', and L'I" that connect the following 3 points:
   point I" (19.8, 23.3, 56.9),
   point K" (19.8, 17.7, 62.5), and
   point L' (12.1, 23.3, 64.6),
   or on the straight lines I"K", K"L', and L'I".
Item 4. A composition comprising a refrigerant, the refrigerant comprising HFO-1132(E), R32, and R1234yf in a total amount of 99.5 mass% or more based on the entire refrigerant,
   wherein
   when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments CD, DA, AI, and IC that connect the following 4 points:
   point C (28.7, 53.7, 17.6),
   point D (9.0, 74.0, 17.0),
   point A (26.0, 74.0, 0.0), and
   point I (26.7, 73.3, 0.0),
   or on the line segments CD, DA, and IC (excluding point A and point I),
      the line segments DA, AI, and IC are straight lines, and
      coordinates (x,y,z) of a point on the line segment CD are represented by
   (x, 0.0069x²-1.2909x+85.059, -0.0069x²+0.2909x+14.941).
Item 5. A composition comprising a refrigerant, the refrigerant comprising HFO-1132(E), R32, and R1234yf in a total amount of 99.5 mass% or more based on the entire refrigerant,
   wherein
   when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments EF, FB, BK', and K'E that connect the following 4 points:
   point E (18.5, 53.1, 28.4),
   point F (0.0, 72.8, 27.2),
   point B (0.0, 73.9, 26.1), and
   point K' (18.0, 74.0, 8.0),
   or on the line segments EF, BK', and K'E (excluding point F and point B),
      the line segments FB, BK', and K'E are straight lines, and
      coordinates (x,y,z) of a point on the line segment EF are represented by
   (x, 0.0077x²-1.2066x+72.8, -0.0077x²+0.2066x+27.2).
Item 6. A composition comprising a refrigerant, the refrigerant comprising HFO-1132(E), R32, and R1234yf in a total amount of 99.5 mass% or more based on the entire refrigerant,
   wherein
   when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines US, ST, and TU that connect the following 3 points:
   point U (32.8, 23.4, 43.8),
   point S (32.8, 19.1, 48.1), and
   point T (26.6, 23.3, 50.1),
   or on the straight lines US, ST, and TU.
Item 7. A composition comprising a refrigerant, wherein the refrigerant comprises:
   HFO-1132(E), R32, and R1234yf; and
   at least one additional refrigerant selected from the group consisting of acetylene, HFO-1132a, HFO-1141, HFO-1123, HFC-143a, HFC-134a, Z-HFO-1132, HFO-1243zf, HFC-245cb, HCFC-1122, HCFC-124, CFC-1113, HFC-152a, HFC-161, and 3,3,3-trifluoropropyne.
Item 8. The composition according to any one of Items 2 to 7, wherein the refrigerant further comprises
   at least one additional refrigerant selected from the group consisting of acetylene, HFO-1132a, HFO-1141, HFO-1123, HFC-143a, HFC-134a, Z-HFO-1132, HFO-1243zf, HFC-245cb, HCFC-1122, HCFC-124, CFC-1113, HFC-152a, HFC-161, and 3,3,3-trifluoropropyne.
Item 9. The composition according to any one of Items 2 to 8, which is for use as an alternative refrigerant for R32 and/or R410A.
Item 10. Use of the composition of any one of Items 2 to 8 as an alternative refrigerant for R32 and/or R410A.
Item 11. A refrigerating machine comprising the composition of any one of Items 2 to 8 as a working fluid.
Item 12. A method for operating a refrigerating machine,
   comprising circulating the composition of any one of Items 2 to 8 as a working fluid in a refrigerating machine.

### Advantageous Effects of Invention

According to the present disclosure, in a refrigerant comprising HFO-1132(E), disproportionation can be suppressed at a refrigerant pressure of 3.0 MPa. In another embodiment, according to the present disclosure, a novel refrigerant comprising HFO-1132(E) can be provided.

### Brief Description of Drawings

Fig. 1 is a schematic view of an apparatus used in a flammability test.

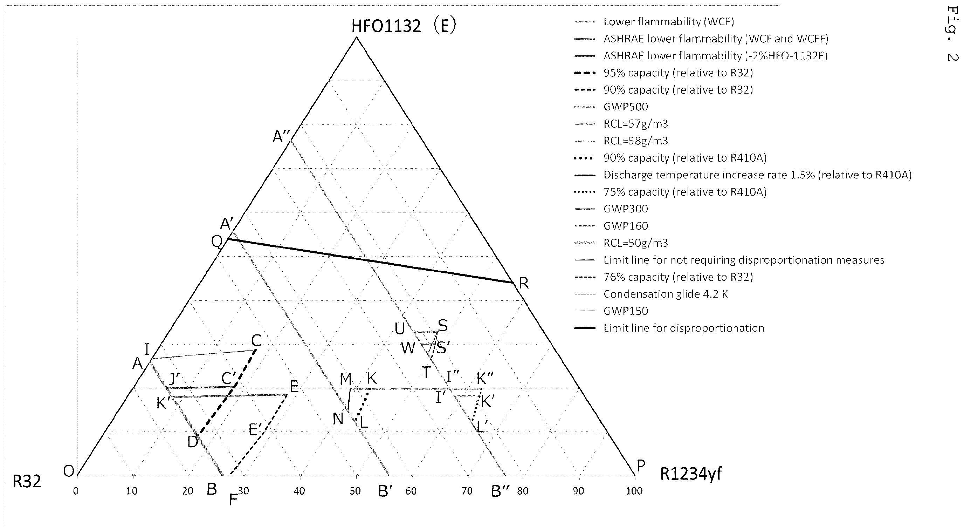

Fig. 2 is a ternary diagram showing the formulation of a composition according to the present disclosure.

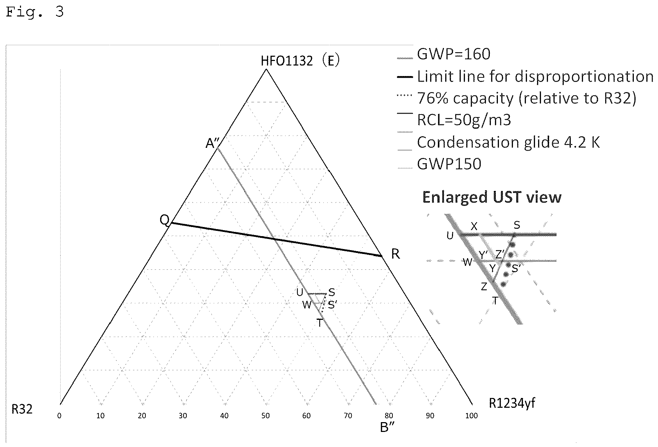

Fig. 3 is a ternary diagram showing the formulation of a composition according to the present disclosure.

### Description of Embodiments

HFO-1132(E) has an unsaturated bond and is thus chemically unstable and can have a risk of disproportionation. In order to solve the above problem, the present inventors conducted an extensive research and consequently found that, in a mixed refrigerant containing HFO-1132(E), R32, and R1234yf in a specific mixing ratio, disproportionation of HFO-1132(E) is suppressed at a mixed refrigerant pressure of 3.0 MPa.

In another embodiment, according to the present disclosure, a novel refrigerant comprising novel HFO-1132(E) has been identified.

The present disclosure has been completed as a result of further research based on this finding. The present disclosure includes the following embodiments.

### Definition of Terms

In the present specification, the term "refrigerant" includes at least compounds that are specified in ISO (the International Organization for Standardization) 817, and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include drop-in alternatives, nearly drop-in alternatives, and retrofits, in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine (refrigerator)" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having an "RCL of x% or more" means that the refrigerant has a refrigerant concentration limit (RCL), calculated in accordance with the US ANSI/ASHRAE Standard 34-2013, of x% or more. RCL refers to a concentration limit in the air in consideration of safety factors. RCL is an index for reducing the risk of acute toxicity, suffocation, and flammability in a closed space where humans are present. RCL is determined in accordance with the ASHRAE Standard. More specifically, RCL is the lowest concentration among the acute toxicity exposure limit (ATEL), the oxygen deprivation limit (ODL), and the flammable concentration limit (FCL), which are respectively calculated in accordance with sections 7.1.1, 7.1.2, and 7.1.3 of the ASHRAE Standard.

In the present specification, "pressure" refers to absolute pressure unless otherwise noted.

In the present specification, a refrigerant having "WCF lower flammability" means that the most flammable formulation (worst case of formulation for flammability: WCF) has a burning velocity of 10 cm/s or less according to the US ANSI/ASHRAE Standard 34-2013.

Further, in the present specification, a refrigerant having "ASHRAE lower flammability" (WCF & WCFF lower flammability) means that the burning velocity of WCF is 10 cm/s or less, that the most flammable fraction formulation (worst case of fractionation for flammability: WCFF), which is specified by performing a leakage test during storage, shipping, or use based on ANSI/ASHRAE 34-2013 using WCF, has a burning velocity of 10 cm/s or less, and that the flammability classification according to the US ANSI/ASHRAE Standard 34-2013 is determined to be classified as "Class 2L."

### 1. Refrigerant

### 1.1 Refrigerant Component

The refrigerant according to the present disclosure is a mixed refrigerant comprising HFO-1132(E), R32, and R1234yf.

When the refrigerant according to the present disclosure satisfies the following requirements, disproportionation of HFO-1132(E) is suppressed at a refrigerant pressure of 3.0 MPa.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines QR, RP, PO, and OQ that connect the following 4 points:
point Q (54.0, 46.0, 0.0),
point R (44.0, 0.0, 56.0),
point P (0.0, 0.0, 100.0), and
point O (0.0, 100.0, 0.0),
or on the straight line QR (excluding point Q and point R).

When the refrigerant according to the present disclosure satisfies the following requirements, disproportionation of HFO-1132(E) is suppressed at a refrigerant pressure of 3.0 MPa; further, the refrigerant has not only a GWP of 300 or less, but also a refrigerant concentration limit (RCL) of 57 g/m³ or more, a refrigerating capacity ratio of 90% or more relative to that of R410A, and a discharge temperature increase rate of 1.5% or less.

In the refrigerant, coordinates (x,y,z) are within the range of a figure surrounded by straight lines MK, KL, LN, and NM that connect the following 4 points:
point M (19.8, 41.2, 39.0),
point K (19.8, 37.7, 42.5),
point L (12.2, 44.2, 43.6), and
point N (14.7, 44.2, 41.1),
or on the straight lines MK, KL, LN, and NM.

When the refrigerant according to the present disclosure satisfies the following requirements, disproportionation of HFO-1132(E) is suppressed at a refrigerant pressure of 3.0 MPa; further, the refrigerant has not only a GWP of 160 or less, but also a refrigerant concentration limit (RCL) of 57 g/m³ or more, and a refrigerating capacity ratio of 750 or more relative to that of R410A.

In the refrigerant, coordinates (x,y,z) are within the range of a figure surrounded by straight lines I"K", K"L', and L'I" that connect the following 3 points:
point I" (19.8, 23.3, 56.9),
point K" (19.8, 17.7, 62.5), and
point L' (12.1, 23.3, 64.6)
or on the straight lines I"K", K"L', and L'I".

When the refrigerant according to the present disclosure satisfies the following requirements, disproportionation of HFO-1132(E) is suppressed at a refrigerant pressure of 3.0 MPa; further, the refrigerant has not only a GWP of 160 or less, but also a refrigerant concentration limit (RCL) of 58 g/m³ or less, and a refrigerating capacity ratio of 750 or more relative to that of R410A.

In the refrigerant, coordinates (x,y,z) are within the range of a figure surrounded by the straight lines I'K', K'L', and L'I' that connect the following 3 points:
point I' (18.2, 23.3, 58.5),
point K' (18.2, 18.8, 63.0), and
point L' (12.1, 23.3, 64.6),
or on the straight lines I'K', K'L', and L'I'.

When the refrigerant according to the present disclosure satisfies the following requirements, the refrigerant has not only a GWP of 500 or less, but also a refrigerating capacity ratio of 950 or more relative to that of R32, and ensures a WCF lower flammability. Additionally, disproportionation of HFO-1132(E) can be suppressed. Accordingly, a refrigerating machine can be operated without taking measures against a situation in which disproportionation occurs.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments CD, DA, AI, and IC that connect the following 4 points:
point C (28.7, 53.7, 17.6),
point D (9.0, 74.0, 17.0),
point A (26.0, 74.0, 0.0), and
point I (26.7, 73.3, 0.0),
or on the line segments CD, DA, and IC (excluding point A and point I),
the line segments DA, AI, and IC are straight lines, and
coordinates (x,y,z) of a point on the line segment CD are represented by
(x, 0.0069x²-1.2909x+85.059, -0.0069x²+0.2909x+14.941).

When the refrigerant according to the present disclosure satisfies the following requirements, the refrigerant has not only a GWP of 500 or less, but also a refrigerating capacity ratio of 950 or more relative to that of R32, and ensures a WCFF lower flammability. Additionally, disproportionation of HFO-1132(E) can be suppressed. Accordingly, a refrigerating machine can be operated without taking measures against a situation in which disproportionation occurs.

In the refrigerant, coordinates (x,y,z) are within the range of a figure surrounded by line segments C'D, DJ', and J'C' that connect the following 3 points:
point C' (20.3, 61.7, 18.0),
point D (9.0, 74.0, 17.0), and
point J' (20.0, 74.0, 6.0),
or on the line segments C'D, DJ', and J'C',
the line segments DJ' and J'C' are straight lines, and
coordinates (x,y,z) of a point on the line segment C'D are represented by
(x, 0.0069x²-1.2909x+85.059, -0.0069x²+0.2909x+14.941).

When the refrigerant according to the present disclosure satisfies the following requirements, the refrigerant has not only a GWP of 500 or less, but also a refrigerating capacity ratio of 90% or more relative to that of R32. By reducing the concentration of highly flammable E-HFO-1132E by 2%, the refrigerant ensures a WCFF lower flammability, which has a high safety factor. Further, disproportionation of HFO-1132(E) can be suppressed. Accordingly, a refrigerating machine can be operated without taking measures against a situation in which disproportionation occurs.

In the refrigerant, coordinates (x,y,z) are within the range of a figure surrounded by line segments EF, FB, BK', and K'E that connect the following 4 points:
point E (18.5, 53.1, 28.4),
point F (0.0, 72.8, 27.2),
point B (0.0, 73.9, 26.1), and
point K' (18.0, 74.0, 8.0),
or on the line segments EF, BK', and K'E (excluding point F and point B),
the line segments FB, BK', and K'E are straight lines, and
coordinates (x,y,z) of a point on the line segment EF are represented by
(x, 0.0077x²-1.2066x+72.8, -0.0077x²+0.2066x+27.2).

When the refrigerant according to the present disclosure satisfies the following requirements, the refrigerant has a refrigerant concentration limit (RCL) of 50 g/m³ or more, a refrigerating capacity ratio of 760 or more relative to that of R32, and a GWP of 160 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines US, ST, and TU that connect the following 3 points:
point U (32.8, 23.4, 43.8),
point S (32.8, 19.1, 48.1), and
point T (26.6, 23.3, 50.1),
or on the straight lines US, ST, and TU.

When the refrigerant according to the present disclosure satisfies the following requirements, no measures against disproportionation are required, and the refrigerant has a refrigerating capacity ratio of 760 or more relative to that of R32 and a GWP of 160 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines WS', S'T, and TW that connect the following 3 points:
point W (30.0, 23.4, 46.6),
point S' (30.0, 20.9, 49.1), and
point T (26.6, 23.3, 50.1),
or on the straight lines WS', S'T, and TW.

When the refrigerant according to the present disclosure satisfies the following requirements, the refrigerant has an RCL of 50 g/m³ or more, a condensation glide of 4.2 K or less, and a GWP of 160 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines US, SZ, and ZU that connect the following 3 points:
point U (32.8, 23.4, 43.8),
point S (32.8, 19.1, 48.1), and
point Z (27.7, 23.4, 48.9),
or on the straight lines US, SZ, and ZU.

When the refrigerant according to the present disclosure satisfies the following requirements, no measures against disproportionation are required, and the refrigerant has a condensation glide of 4.2 K or less and a GWP of 160 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines WZ', Z'Z, and ZW that connect the following 3 points:
point W (30.0, 23.4, 46.6),
point Z' (30.0, 21.5, 48.5), and
point Z (27.7, 23.4, 48.9),
or on the straight lines WZ', Z'Z, and ZW.

When the refrigerant according to the present disclosure satisfies the following requirements, the refrigerant has an RCL of 50 g/m³ or more, a condensation glide of 4.2 K or less, and a GWP of 150 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines XS, SY, and YX that connect the following 3 points:
point X (32.8, 21.9, 45.3),
point S (32.8, 19.1, 48.1), and
point Y (29.5, 21.9, 48.6),
or on the straight lines XS, SY, and YX.

When the refrigerant according to the present disclosure satisfies the following requirements, no measures against disproportionation are required, and the refrigerant has an RCL of 50 g/m³ or more, a condensation glide of 4.2 K or less, and a GWP of 150 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines Y'Z', Z'Y, and YY' that connect the following 3 points:
point Y' (30.0, 21.9, 48.1),
point Z' (30.0,21.5,48.5), and
point Y (29.5, 21.9, 48.6),
or on the straight lines Y'Z', Z'Y, and YY'.

The refrigerant according to the present disclosure preferably comprises HFO-1132(E) in an amount of 54 mass% or less, more preferably 44 mass% or less, still more preferably 32.8 mass% or less, and most preferably 30 mass% or less, based on the entire refrigerant, considering that no measures against disproportionation are required.

The refrigerant according to the present disclosure preferably comprises HFO-1132(E) in an amount of 5 mass% or more, more preferably 7.5 mass% or more, still more preferably 10 mass% or more, and most preferably 12 mass% or more, based on the entire refrigerant.

The refrigerant according to the present disclosure may further comprise other additional refrigerants in addition to HFO-1132(E), R32, and R1234yf as long as the above properties and effects are not impaired. In this respect, the refrigerant according to the present disclosure preferably comprises HFO-1132(E), R32, and R1234yf in a total amount of 99.5 mass% or more, more preferably 99.75 mass% or more, still more preferably 99.9 mass% or more, even more preferably 99.99 mass% or more, and most preferably 99.999 mass% or more, based on the entire refrigerant. The refrigerant according to the present disclosure may consist essentially of HFO-1132(E), R32, and R1234yf, or consist only of HFO-1132(E), R32, and R1234yf. When the refrigerant according to the present disclosure consists essentially of HFO-1132(E), R32, and R1234yf, the refrigerant may further comprise, in addition to HFO-1132(E), R32, and R1234yf, impurities that are inevitably mixed in during the manufacturing processes of these refrigerants.

Additional refrigerants are not particularly limited and can be widely selected. The mixed refrigerant may contain one additional refrigerant, or two or more additional refrigerants. Examples of the additional refrigerants include acetylene, HFO-1132a, HFO-1141, HFO-1123, HFC-143a, HFC-134a, Z-HFO-1132, HFO-1243zf, HFC-245cb, HCFC-1122, HCFC-124, CFC-1113, HFC-152a, HFC-161, and 3,3,3-trifluoropropyne. The total amount of the additional refrigerants is preferably 0.5 mass% or less, more preferably 0.25 mass% or less, still more preferably 0.1 mass% or less, and most preferably 0.01 mass% or less, based on the entire refrigerant.

### 1.2. Use

The refrigerant according to the present disclosure can be preferably used as a working fluid in a refrigerating machine.

The composition according to the present disclosure is suitable for use as an alternative refrigerant for R32 and/or R410A.

### 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

### 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃Cl)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152a (1,1-difluoroethane, CHF₂CH₃)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The refrigerant composition according to the present disclosure may comprise one or more tracers at a total concentration of about 10 parts per million by weight (ppm) or more and about 1000 ppm or less, based on the entire refrigerant composition. The refrigerant composition according to the present disclosure preferably comprises one or more tracers at a total concentration of about 30 ppm or more, and more preferably about 50 ppm or more, based on the entire refrigerant composition. The refrigerant composition according to the present disclosure preferably comprises one or more tracers at a total concentration of about 500 ppm or less, and more preferably about 300 ppm or less.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. The content of the stabilizer is generally preferably 0.01 mass% or more, and more preferably 0.05 mass% or more, based on the entire refrigerant. The content of the stabilizer is generally 5 mass% or less, and more preferably 2 mass% or less, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. The content of the polymerization inhibitor is generally preferably 0.01 mass% or more, and more preferably 0.05 mass% or more, based on the entire refrigerant. The content of the polymerization inhibitor is generally preferably 5 mass% or less based on the entire refrigerant.

### 3. Refrigeration Oil-Containing Working Fluid

The refrigeration oil-containing working fluid according to the present disclosure comprises at least the refrigerant or refrigerant composition according to the present disclosure and a refrigeration oil, and is for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 mass% or more and 50 mass% or less of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extremepressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. A refrigeration oil with a kinematic viscosity of 400 cSt or less at 40°C is preferable from the standpoint of lubrication.

The refrigeration oil-containing working fluid according to the present disclosure may further optionally contain at least one additive. Examples of additives include compatibilizing agents described below.

### 3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises circulating the refrigerant according to the present disclosure in a refrigerating machine.

### 5. Method for Suppressing Disproportionation Reaction

The method for suppressing a disproportionation reaction according to the present disclosure is a method for suppressing a disproportionation reaction of HFO-1132(E), the method comprising operating a refrigeration cycle using the refrigerant according to the present disclosure.

The method for suppressing a disproportionation reaction according to the present disclosure produces an effect of preventing a disproportionation reaction of HFO-1132(E) from occurring, in particular, at a refrigerant pressure of 3.0 MPa.

By the method for suppressing a disproportionation reaction according to the present disclosure, a refrigeration cycle can be operated in a refrigerating machine that has no particular means for suppressing a disproportionation reaction.

### 6. Use for Suppressing Disproportionation Reaction

The use according to the present disclosure is use of R32 and/or R1234yf for suppressing a disproportionation reaction of HFO-1132(E); the suppression of the disproportionation reaction is achieved by mixing HFO-1132(E), R32, and R1234yf such that the mixing ratio thereof is equal to that used in the refrigerant according to the present disclosure.

The use for suppressing a disproportionation reaction according to the present disclosure produces an effect of preventing a disproportionation reaction of HFO-1132(E) from occurring, in particular, at a refrigerant pressure of 3.0 MPa.

The embodiments are described above; however, it will be understood that various changes in forms and details can be made without departing from the spirit and scope of the claims.

### Examples

The present disclosure is described in more detail below with reference to Examples. However, the present disclosure is not limited to the Examples.

Mixed refrigerants were prepared by mixing HFO-1132(E), R32, and R1234yf at mass% based on their sum shown in Tables 1 to 3.

Each of these mixed refrigerants was examined in terms of the presence or absence of a disproportionation reaction by using the following test methods under the following conditions. Table 1 shows the results.

### Test Methods

A refrigerant composition to be tested was transferred to a test container and heated to 150°C. Subsequently, a Pt wire in the container was melted and cut by applying a voltage, giving the refrigerant composition 30 J of energy. The presence or absence of disproportionation reaction was determined based on a rapid increase in the pressure and temperature in the apparatus.

### Test Conditions

Test container: 38-cc SUS container
Test temperature: 150°C
Pressure: 3.0 MPa (absolute pressure)

### Determination Criteria

Non-explosion: The temperature or pressure after the melting and cutting of the Pt wire increased to less than twice, and no rapid disproportionation reaction occurred.
Explosion: The temperature or pressure increased to twice or more after the melting and cutting of the Pt wire, and a rapid disproportionation reaction occurred.

**Table 1**

| | Item | Unit | Experiment Series 1 | | | Experiment Series 2 | | | | | Experiment Series 3 | | |
|---|---|---|---|---|---|---|---|---|---|---|---|---|---|
| | | | Com Ex. 1 | Ex. 1 | Ex. 2 | Com Ex. 2 | Com Ex. 3 | Ex. 3 | Ex. 4 | Ex. 5 | Com Ex. 4 | Ex. 6 | Ex. 7 |
| HFO-1132 (E) | | mass% | 56.0 | 54.0 | 52.0 | 51.0 | 51.0 | 49.0 | 47.0 | 47.0 | 46.0 | 44.0 | 42.0 |
| R32 | | mass% | 44.0 | 46.0 | 48.0 | 23.0 | 21.0 | 23.0 | 25.0 | 23.0 | 0.0 | 0.0 | 0.0 |
| R1234yf | | mass% | 0.0 | 0.0 | 0.0 | 26.0 | 28.0 | 28.0 | 28.0 | 30.0 | 54.0 | 56.0 | 58.0 |
| Disproportionation reaction (3Mpa) | | - | Explosion | Non-explosion | Non-explosion | Explosion | Explosion | Non-explosion | Non-explosion | Non-explosion | Explosion | Non-explosion | Non-explosion |

The COP ratio and the refrigerating capacity ratio of the mixed refrigerants relative to those of R410A or R32 were determined. The cycle performance of R410A, R32, and the compositions comprising a mixture of HFO-1132(E), R1234yf, and R32 was determined by performing theoretical refrigeration cycle calculations for mixed refrigerants by using the Reference Fluid Thermodynamic and Transport Properties Database (Refprop 9.0) of the National Institute of Science and Technology (NIST) under the following conditions. The physical property data of HFO-1132(E) were obtained from actual measurements.
Evaporating temperature: 5°C
Condensation temperature: 45°C
Superheating temperature: 5 K
Supercooling temperature: 5 K
Compressor efficiency: 700

Tables 2 to 8 show these values, together with the GWP of each mixed refrigerant.

**Table 2**

| | Item | Unit | Com Ex. 5 | Com Ex. 6 | Com Ex. 7 | Com Ex. 8 | Com Ex. 9 | Com Ex. 10 | Com Ex. 11 | Com Ex. 12 | |
|---|---|---|---|---|---|---|---|---|---|---|---|
| | | | | | Q | R | A' | B' | A" | B" | |
| HFO-1132 (E) | | mass% | R32 | R410A | 54.0 | 44.0 | 55.7 | 0.0 | 76.4 | 0.0 | |
| R32 | | mass% | | | 46.0 | 0.0 | 44.3 | 44.1 | 23.6 | 23.3 | |
| R1234yf | | mass% | | | 0.0 | 56.0 | 0.0 | 55.9 | 0.0 | 76.7 | |
| GWP | | - | 675 | 2088 | 365 | 3 | 300 | 300 | 160 | 160 | |
| COP ratio | | %(relative to R410A) | 102.4 | 100.0 | 99.3 | 101.1 | 98.9 | 102.2 | 98.6 | 103.2 | |
| Refrigerating capacity ratio | | %(relative to R410A) | 109.8 | 100.0 | 112.3 | 72.5 | 111.2 | 82.6 | 106.8 | 67.1 | |
| Discharge temperature increase rate | | %(relative to R410A) | 23.5 | 0.0 | 12.6 | -11.2 | 10.5 | -2.2 | 6.8 | -11.0 | |
| RCL | | g/m³ | 72.3 | - | 41.8 | 45.3 | 41.2 | 72.3 | 35.6 | 72.2 | |
| | | | | | | | | | | | |

| | Item | Unit | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|---|
| | | | K | L | M | N | I' | K' | L' | I" | K" |
| HFO-1132 (E) | | mass% | 19.8 | 12.2 | 19.8 | 14.7 | 18.2 | 18.2 | 12.1 | 19.8 | 19.8 |
| R32 | | mass% | 37.7 | 44.2 | 41.2 | 44.2 | 23.3 | 18.8 | 23.3 | 23.3 | 17.7 |
| R1234yf | | mass% | 42.5 | 43.6 | 39.0 | 41.1 | 58.5 | 63.0 | 64.6 | 56.9 | 62.5 |
| GWP | | - | 256 | 300 | 280 | 300 | 160 | 130 | 160 | 160 | 122 |
| COP ratio | | %(relative to R410A) | 100.6 | 101.1 | 100.6 | 100.9 | 101.2 | 101.5 | 101.8 | 101.0 | 101.4 |
| Refrigerating capacity ratio | | %(relative to R410A) | 90.0 | 90.0 | 92.4 | 91.5 | 78.7 | 75.0 | 75.0 | 79.6 | 75.1 |
| Discharge temperature increase rate | | %(relative to R410A) | 0.1 | 1.0 | 1.5 | 1.5 | -5.9 | -7.8 | -7.4 | -5.5 | -7.9 |
| RCL | | g/m³ | 57.0 | 62.0 | 57.0 | 60.3 | 58.0 | 58.0 | 62.1 | 57.0 | 57.0 |

**Table 3**

| Item | Unit | A | B | C | C' | D | E | E' | F | J' | K' |
|---|---|---|---|---|---|---|---|---|---|---|---|
| | | Com Ex. 13 | Com Ex. 14 | Ex. 17 | Ex. 18 | Ex. 19 | Ex. 20 | Ex. 21 | Com Ex. 15 | Ex. 7 | Ex. 8 |
| E-HFO-1132 | mass% | 26.0 | 0.0 | 28.7 | 20.3 | 9.0 | 18.5 | 10.0 | 0.0 | 20.0 | 18.0 |
| R32 | mass% | 74.0 | 73.9 | 53.7 | 61.7 | 74.0 | 53.1 | 61.5 | 72.8 | 74.0 | 74.0 |
| R1234yf | mass% | 0.0 | 26.1 | 17.6 | 18.0 | 17.0 | 28.4 | 28.5 | 27.2 | 6.0 | 80 |
| GWP | - | 500 | 500 | 363 | 417 | 500 | 360 | 416 | 492 | 500 | 500 |
| Comparison in COPc | %(relative to R32) | 98.1 | 100.0 | 97.8 | 98.4 | 99.3 | 98.4 | 99.1 | 100.0 | 98.5 | 98.6 |
| Comparison in refrigerating capacity | %(relative to R32) | 102.6 | 90.5 | 95.0 | 95.0 | 95.0 | 90.0 | 90.0 | 90.0 | 100.1 | 99.2 |
| Discharge temperature | °C | 90.1 | 85.1 | 83.5 | 84.8 | 87.0 | 81.6 | 82.8 | 84.7 | 89.1 | 88.7 |
| | | | | | | | | | | | |

| Item | Unit | Ex.24 | Ex. 25 | Ex. 26 | Ex. 27 | Ex.28 | Ex. 29 | Ex. 30 | Ex. 31 | Ex. 32 | Ex. 33 |
|---|---|---|---|---|---|---|---|---|---|---|---|
| | | S | S' | T | U | W | Z' | Z | X | Y' | Y |
| E-HFO-1132 | mass% | 32.8 | 30.0 | 26.6 | 32.8 | 30.0 | 30.0 | 27.7 | 32.8 | 30.0 | 29.5 |
| R32 | mass% | 19.1 | 20.9 | 23.3 | 23.4 | 23.4 | 21.5 | 23.4 | 21.9 | 21.9 | 21.9 |
| R1234yf | mass% | 48.1 | 49.1 | 50.1 | 43.8 | 46.6 | 48.5 | 48.9 | 45.3 | 48.1 | 48.6 |
| GWP | - | 131 | 143 | 160 | 160 | 160 | 147 | 160 | 150 | 150 | 150 |
| Comparison in COPc | %(relative to R32) | 97.9 | 98.0 | 98.1 | 97.7 | 97.8 | 97.9 | 98.0 | 97.7 | 97.9 | 98.0 |
| Comparison in refrigerating capacity | %(relative to R32) | 76.0 | 76.0 | 76.0 | 79.1 | 77.8 | 76.4 | 76.6 | 78.1 | 76.7 | 76.5 |
| Condensation glide | K | 4.2 | 4.3 | 4.3 | 3.7 | 4.0 | 4.2 | 4.2 | 3.9 | 4.1 | 4.2 |
| RCL | g/m3 | 50.0 | 51.4 | 53.2 | 50.0 | 51.4 | 51.4 | 52.6 | 50.0 | 51.4 | 51.7 |

**Table 4**

| | Item | Unit | Example 1 | Example 2 | Example 3 | Example 4 | Example 5 | Example 6 | Example 7 | Example 8 |
|---|---|---|---|---|---|---|---|---|---|---|
| HFO-1132 (E) | | mass% | 11.0 | 11.0 | 11.0 | 15.0 | 15.0 | 15.0 | 15.0 | 15.0 |
| R32 | | mass% | 50.0 | 45.0 | 40.0 | 50.0 | 46.0 | 44.0 | 42.0 | 40.0 |
| R1234yf | | mass% | 39.0 | 44.0 | 49.0 | 35.0 | 39.0 | 41.0 | 43.0 | 45.0 |
| GWP | | - | 339 | 306 | 272 | 339 | 312 | 299 | 285 | 272 |
| COP ratio | | %(relative to R410A) | 101.2 | 101.2 | 101.2 | 101.0 | 100.9 | 100.9 | 100.9 | 100.9 |
| Refrigerating capacity ratio | | %(relative to R410A) | 92.9 | 89.9 | 86.6 | 95.2 | 92.7 | 91.5 | 90.2 | 88.9 |
| Discharge temperature increase rate | | %(relative to R410A) | 3.0 | 1.0 | -1.0 | 3.9 | 2.3 | 1.5 | 0.7 | 0.0 |
| RCL | | g/m3 | 62.9 | 62.9 | 62.9 | 60.1 | 60.1 | 60.1 | 60.1 | 60.1 |
| | | | | | | | | | | |

| | Item | Unit | Example 9 | Example 10 | Example 11 | Example 12 | Example 13 | Example 14 | Example 15 | Example 16 |
|---|---|---|---|---|---|---|---|---|---|---|
| HFO-1132 (E) | | mass% | 15.0 | 19.0 | 19.0 | 19.0 | 19.0 | 19.0 | 15.0 | 19.5 |
| R32 | | mass% | 35.0 | 50.0 | 45.0 | 40.0 | 35.0 | 30.0 | 22.0 | 22.0 |
| R1234yf | | mass% | 50.0 | 31.0 | 36.0 | 41.0 | 46.0 | 51.0 | 63.0 | 58.5 |
| GWP | | - | 238 | 339 | 305 | 272 | 238 | 205 | 151 | 151 |
| COP ratio | | %(relative to R410A) | 101.0 | 100.7 | 100.6 | 100.6 | 100.7 | 100.8 | 101.6 | 101.1 |
| Refrigerating capacity ratio | | %(relative to R410A) | 85.5 | 97.3 | 94.3 | 91.1 | 87.8 | 84.2 | 75.7 | 78.4 |
| Discharge temperature increase rate | | %(relative to R410A) | -2.0 | 4.9 | 2.8 | 0.9 | -1.1 | 3.0 | 7.2 | -6.1 |
| RCL | | g/m³ | 60.1 | 57.5 | 57.5 | 57.5 | 57.5 | 57.5 | 60.1 | 57.2 |

**Table 5**

| Item | Unit | Example 17 | Example 18 | Example 19 | Example 20 | Example 21 | Example 22 | Example 23 | Example 24 | Example 25 | Example 26 |
|---|---|---|---|---|---|---|---|---|---|---|---|
| E-HFO-1132 | mass% | 5.0 | 5.0 | 5.0 | 10.0 | 10.0 | 10.0 | 15.0 | 15.0 | 15.0 | 15.0 |
| R32 | mass% | 60.0 | 70.0 | 80.0 | 60.0 | 70.0 | 80.0 | 60.0 | 70.0 | 80.0 | 59.0 |
| R1234yf | mass% | 35.0 | 25.0 | 15.0 | 30.0 | 20.0 | 10.0 | 25.0 | 15.0 | 5.0 | 26.0 |
| GWP | - | 406 | 474 | 541 | 406 | 473 | 541 | 406 | 473 | 540 | 399 |
| Comparison in COPc | % (relative to R32) | 99.4 | 99.5 | 99.6 | 99.1 | 99.2 | 99.2 | 98.7 | 98.8 | 98.9 | 98.7 |
| Comparison in refrigerating capacity | % (relative to R32) | 86.8 | 91.4 | 95.5 | 89.3 | 93.8 | 97.8 | 91.7 | 962 | 100.1 | 91.3 |
| Discharge temperature | °C | 81.3 | 84.7 | 88.3 | 82.3 | 85.7 | 89.4 | 83.2 | 86.7 | 90.3 | 82.9 |
| | | | | | | | | | | | |

| Item | Unit | Example 27 | Example 28 | Example 29 | Example 30 | Example 31 | Example 32 | Example 33 | Example 84 | Example 35 | Example 36 |
|---|---|---|---|---|---|---|---|---|---|---|---|
| E-HFO-1132 | mass% | 160 | 17.0 | 18.0 | 20.0 | 20.0 | 20.0 | 25.0 | 25.0 | 25.0 | 25.0 |
| R32 | mass% | 59.0 | 59.0 | 59.0 | 60.0 | 70.0 | 80.0 | 50.0 | 60.0 | 70.0 | 75.0 |
| R1234yf | mass% | 25.0 | 24.0 | 23.0 | 20.0 | 10.0 | 0.0 | 25.0 | 15.0 | 5.0 | 0.0 |
| GWP | - | 399 | 399 | 399 | 406 | 473 | 540 | 339 | 406 | 473 | 507 |
| Comparison in COPc | % (relative to R32) | 98.6 | 98.6 | 98.5 | 98.4 | 98.5 | 98.5 | 98.0 | 98.1 | 98.2 | 98.2 |
| Comparison in refrigerating capacity | % (relative to R32) | 91.8 | 92.2 | 92.7 | 94.1 | 98.5 | 102.3 | 91.5 | 96.3 | 100.6 | 102.6 |
| Discharge temperature | °C | 83.1 | 83.2 | 83.4 | 84.1 | 87.6 | 91.3 | 81.7 | 85.0 | 88.5 | 90.3 |
| | | | | | | | | | | | |

| Item | Unit | Example 37 | Example 88 | Example 39 | Example 40 | Example 41 | | | | | |
|---|---|---|---|---|---|---|---|---|---|---|---|
| E-HFO-1132 | mass% | 23.0 | 24.0 | 25.0 | 26.0 | 27.0 | | | | | |
| R32 | mass% | 59.0 | 59.0 | 59.0 | 59.0 | 59.0 | | | | | |
| R1234yf | mass% | 18.0 | 17.0 | 16.0 | 15.0 | 14.0 | | | | | |
| GWP | - | 399 | 399 | 399 | 399 | 399 | | | | | |
| Comparison in COPc | % (relative to R32) | 98.2 | 98.1 | 98.1 | 98.0 | 97.9 | | | | | |
| Comparison in refrigerating capacity | % (relative to R32) | 95.0 | 95.4 | 95.9 | 96.3 | 96.8 | | | | | |
| Discharge temperature | °C | 84.3 | 84.5 | 84.7 | 84.8 | 85.0 | | | | | |

**Table 6**

| Item | Unit | Example 42 | Example 43 | Example 44 | Example 45 | Example 46 | Example 47 | Example 48 | Example 49 | Example 50 | Example 51 |
|---|---|---|---|---|---|---|---|---|---|---|---|
| E-HFO-1132 | mass% | 10.0 | 20.0 | 30.0 | 40.0 | 50.0 | 10.0 | 20.0 | 30.0 | 40.0 | 50.0 |
| R32 | mass% | 5.0 | 5.0 | 5.0 | 5.0 | 5.0 | 10.0 | 10.0 | 10.0 | 10.0 | 10.0 |
| R1234yf | mass% | 85.0 | 75.0 | 65.0 | 55.0 | 45.0 | 80.0 | 70.0 | 60.0 | 50.0 | 40.0 |
| GWP | - | 37 | 37 | 37 | 36 | 36 | 71 | 71 | 70 | 70 | 70 |
| Comparison in COPc | % (relative to R32) | 101.0 | 100.2 | 99.3 | 98.5 | 97.9 | 100.7 | 99.7 | 98.8 | 98.0 | 97.5 |
| Comparison in refrigerating capacity | % (relative to R32) | 51.4 | 57.7 | 63.3 | 68.5 | 73.3 | 56.3 | 62.2 | 67.6 | 72.7 | 77.3 |
| Condensation glide | K | 6.5 | 6.5 | 5.7 | 4.7 | 3.6 | 7.0 | 6.5 | 5.5 | 4.4 | 3.3 |
| RCL | g/m3 | 63.6 | 56.9 | 51.4 | 46.9 | 43.1 | 63.6 | 56.9 | 51.4 | 46.9 | 43.1 |
| Disproportionation reaction(3Mpa) | - | - | - | - | Non-explosion | Explosion | - | - | - | Non-explosion | Explosion |
| | | | | | | | | | | | |

| Item | Unit | Example 52 | Example 53 | Example 54 | Example 55 | Example 56 | Example 57 | Example 58 | Example 59 | Example 60 | Example 61 |
|---|---|---|---|---|---|---|---|---|---|---|---|
| E-HFO-1132 | mass% | 10.0 | 20.0 | 30.0 | 40.0 | 50.0 | 10.0 | 20.0 | 30.0 | 40.0 | 50.0 |
| H32 | mass% | 15.0 | 15.0 | 15.0 | 15.0 | 15.0 | 20.0 | 20.0 | 20.0 | 20.0 | 20.0 |
| R1234yf | mass% | 75.0 | 65.0 | 55.0 | 45.0 | 35.0 | 70.0 | 60.0 | 50.0 | 40.0 | 30.0 |
| GWP | - | 104 | 104 | 104 | 103 | 103 | 138 | 138 | 137 | 137 | 137 |
| Comparison in COPc | % (relative to R32) | 100.3 | 99.3 | 98.3 | 97.7 | 97.2 | 99.9 | 98.9 | 98.0 | 97.4 | 97.0 |
| Comparison in refrigerating capacity | % (relative to R32) | 60.7 | 66.4 | 71.6 | 76.5 | 81.1 | 64.7 | 70.2 | 75.4 | 80.1 | 84.6 |
| Condensation glide | K | 6.9 | 6.1 | 5.0 | 3.9 | 2.9 | 6.4 | 5.5 | 4.4 | 3.3 | 2.4 |
| RCL | g/m3 | 63.7 | 56.9 | 51.4 | 46.9 | 43.1 | 63.7 | 56.9 | 51.4 | 46.9 | 43.1 |
| Disproportionation reaction(3Mpa) | - | - | - | - | Non-explosion | Explosion | - | - | - | Non-explosion | Explosion |
| | | | | | | | | | | | |

| Item | Unit | Example 62 | Example 63 | Example 64 | Example 65 | Example 66 | Example 67 | Example 68 | Example 69 | Example 70 | Example 71 |
|---|---|---|---|---|---|---|---|---|---|---|---|
| E-HFO-1132 | mass% | 10.0 | 17.0 | 18.0 | 19.0 | 20.0 | 21.0 | 22.0 | 23.0 | 24.0 | 25.0 |
| R32 | mass% | 21.9 | 21.9 | 21.9 | 21.9 | 21.9 | 21.9 | 21.9 | 21.9 | 21.9 | 21.9 |
| R1234yf | mass% | 68.1 | 61.1 | 60.1 | 59.1 | 58.1 | 57.1 | 56.1 | 55.1 | 54.1 | 53.1 |
| GWP | - | 151 | 150 | 150 | 150 | 150 | 150 | 150 | 150 | 150 | 150 |
| comparison in COPc | % (relative to R32) | 99.7 | 99.0 | 98.9 | 98.8 | 98.7 | 98.6 | 98.5 | 98.5 | 98.4 | 98.3 |
| Comparison in refrigerating capacity | % (relative to R32) | 66.1 | 70.0 | 70.5 | 71.1 | 71.6 | 72.1 | 72.7 | 73.2 | 73.7 | 74.2 |
| Condensation glide | K | 6.1 | 5.5 | 5.4 | 5.3 | 5.2 | 5.1 | 5.0 | 4.9 | 4.8 | 4.7 |
| RCL | g/m3 | 63.7 | 58.8 | 58.1 | 57.5 | 56.9 | 56.3 | 55.7 | 55.1 | 54.6 | 54.0 |
| Disproportionation reaction(3Mpa) | - | - | - | - | - | - | - | - | - | - | - |

**Table 7**

| Item | Unit | Example 52 | Example 53 | Example 54 | Example 55 | Example 56 | Example 57 | Example 58 | Example 59 | Example 60 | Example 61 |
|---|---|---|---|---|---|---|---|---|---|---|---|
| E-HFO-1132 | mass% | 26.0 | 27.0 | 28.0 | 29.0 | 31.0 | 32.0 | 35.0 | 40.0 | 50.0 | 10.0 |
| R32 | mass% | 21.9 | 21.9 | 21.9 | 21.9 | 21.9 | 21.9 | 21.9 | 21.9 | 21.9 | 30.0 |
| R1234yf | mass% | 52.1 | 51.1 | 50.1 | 49.1 | 47.1 | 46.1 | 43.1 | 38.1 | 28.1 | 60.0 |
| GWP | - | 150 | 150 | 150 | 150 | 150 | 150 | 150 | 150 | 149 | 205 |
| Comparison in COPc | % (relative to R32) | 98.2 | 98.1 | 98.1 | 98.0 | 97.8 | 97.8 | 97.6 | 97.3 | 96.9 | 99.2 |
| Comparison in refrigerating capacity | % (relative to R32) | 74.7 | 75.2 | 75.7 | 76.2 | 77.2 | 77.7 | 79.1 | 81.5 | 85.9 | 71.9 |
| Condensation glide | K | 4.6 | 4.5 | 4.4 | 4.3 | 4.0 | 3.9 | 3.6 | 3.1 | 2.2 | 4.9 |
| RCL | g/m3 | 53.5 | 52.9 | 52.4 | 51.9 | 50.9 | 50.5 | 49.1 | 46.9 | 43.1 | 63.7 |
| Disproportionation reaction(3Mpa) | - | - | - | - | - | - | - | - | Non-explosion | Explosion | - |
| | | | | | | | | | | | |

| Item | Unit | Example 72 | Example 73 | Example 74 | Example 75 | | | | | | |
|---|---|---|---|---|---|---|---|---|---|---|---|
| E-HFO-1132 | mass% | 20.0 | 30.0 | 40.0 | 60.0 | | | | | | |
| R32 | mass% | 30.0 | 30.0 | 30.0 | 30.0 | | | | | | |
| R1234yf | mass% | 50.0 | 40.0 | 30.0 | 10.0 | | | | | | |
| GWP | - | 205 | 204 | 204 | 204 | | | | | | |
| Comparison in COPc | % (relative to R32) | 98.3 | 97.7 | 97.1 | 96.5 | | | | | | |
| Comparison in refrigerating capacity | % (relative to R32) | 77.2 | 822 | 86.8 | 95.1 | | | | | | |
| Condensation glide | K | 4.1 | 3.1 | 2.3 | 0.8 | | | | | | |
| RCL | g/m3 | 56.9 | 51.4 | 46.9 | 39.9 | | | | | | |
| Disproportionation reaction(3Mpa) | - | - | - | Non-explosion | Explosion | | | | | | |

**Table 8**

| Item | Unit | Example 76 | Example 77 | Example 78 | Example 79 | Example 80 | Example 81 | Example 82 | Example 83 | Example 84 | Example 85 |
|---|---|---|---|---|---|---|---|---|---|---|---|
| E-HFO-1132 | mass% | 10.0 | 15.0 | 18.0 | 19.0 | 20.0 | 21.0 | 22.0 | 23.0 | 24.0 | 25.0 |
| R32 | mass% | 21.5 | 21.5 | 21.5 | 21.5 | 21.5 | 21.5 | 21.5 | 21.5 | 21.5 | 21.5 |
| R1234yf | mass% | 68.5 | 63.5 | 60.5 | 59.5 | 58.5 | 57.5 | 56.5 | 55.5 | 54.5 | 53.5 |
| GWP | - | 148 | 148 | 148 | 148 | 148 | 148 | 148 | 148 | 148 | 148 |
| Comparison in COPc | % (relative to R32) | 99.8 | 99.2 | 98.9 | 98.8 | 98.7 | 98.7 | 98.6 | 98.5 | 98.4 | 98.3 |
| Comparison in refrigerating capacity | % (relative to R32) | 65.8 | 68.6 | 70.3 | 70.8 | 71.3 | 71.9 | 72.4 | 72.9 | 73.4 | 73.9 |
| Condensation glide | K | 6.2 | 5.8 | 5.5 | 5.4 | 5.3 | 5.2 | 5.1 | 4.9 | 4.8 | 4.7 |
| RCL | g/m3 | 63.6 | 56.9 | 51.4 | 46.9 | 43.1 | 63.6 | 56.9 | 51.4 | 46.9 | 43.1 |
| Disproportionation reaction(3Mpa) | - | - | - | - | - | - | - | - | - | - | - |
| | | | | | | | | | | | |

| Item | Unit | Example 86 | Example 87 | Example 88 | Example 89 | Example 90 | Example 91 | Example 92 | Example 93 | Example 94 | Example 95 |
|---|---|---|---|---|---|---|---|---|---|---|---|
| E-HFO-1132 | mass% | 26.0 | 27.0 | 28.0 | 29.0 | 31.0 | 32.0 | 35.0 | 40.0 | 50.0 | 10.0 |
| R32 | mass% | 21.5 | 21.5 | 21.5 | 21.5 | 21.5 | 21.5 | 21.5 | 21.5 | 21.5 | 30.0 |
| R1234yf | mass% | 52.5 | 51.5 | 50.5 | 49.5 | 47.5 | 46.5 | 43.5 | 38.5 | 28.5 | 60.0 |
| GWP | - | 147 | 147 | 147 | 147 | 147 | 147 | 147 | 147 | 147 | 205 |
| Comparison in COPc | % (relative to R32) | 98.2 | 98.2 | 98.1 | 98.0 | 97.9 | 97.8 | 97.6 | 97.3 | 96.9 | 99.2 |
| Comparison in refrigerating capacity | %(relative to R32) | 74.4 | 74.9 | 75.4 | 75.9 | 76.9 | 77.4 | 78.8 | 81.2 | 85.6 | 71.9 |
| Condensation glide | K | 4.6 | 4.5 | 4.4 | 4.3 | 4.1 | 4.0 | 3.7 | 3.2 | 2.2 | 4.9 |
| RCL | g/m3 | 63.7 | 56.9 | 51.4 | 46.9 | 43.1 | 63.7 | 56.9 | 51.4 | 46.9 | 63.7 |
| Disproportionation reaction(3Mpa) | - | - | - | - | - | - | - | - | Non-explosion | Explosion | - |

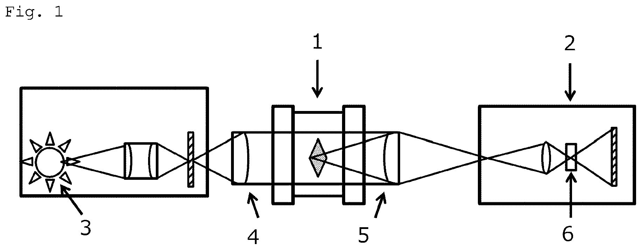

A burning velocity test was performed using the apparatus shown in Fig. 1 in the following manner. First, the mixed refrigerants were purified to 99.5% or more, and were deaerated by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The propagation of the flame was visualized by schlieren photography. A cylindrical container (inner diameter: 155 mm, length: 198 mm) equipped with two light-transmissive acrylic windows was used as the sample cell, and a xenon lamp was used as the light source. Schlieren images of the flame were recorded by a high-speed digital video camera at a frame rate of 600 fps and stored on a PC.

The burning velocity (Su (cm/s)) is expressed by the volume of unburned gas consumed by the flame surface of a unit area per unit time and is calculated by using the following formula.

Su=Sb*pu/pb

Sb: flame propagation rate (cm/s)
ρu: adiabatic flame temperature (unburned)
ρb: adiabatic flame temperature (burned)

Sb was determined from the schlieren video images. ρu was calculated from a measurement temperature. ρb was calculated from the combustion heat and isobaric specific heat of combustion gas.

Table 9 shows the results.

**Table 9**

| Item | | Unit | C | I |
|---|---|---|---|---|
| WCF | HFO-1132 (E) | mass% | 28.7 | 26.7 |
| | R32 | mass% | 53.7 | 73.3 |
| | R1234yf | mass% | 17.6 | 0 |
| Burning velocity (WCF) | | cm/s | 10 | 10 |

| Item | | Unit | C' | J' |
|---|---|---|---|---|
| WCF | HFO-1132 (E) | mass% | 20.3 | 20.0 |
| | R32 | mass% | 61.7 | 74.0 |
| | R1234yf | mass% | 18.0 | 6.0 |
| Leakage conditions that lead to WCFF | | | Storage/transport -40°C, 0% at release gas phase side | Storage/transport -40°C, 0% at release gas phase side |
| WCFF | HFO-1132 (E) | mass% | 25.6 | 23.8 |
| | R32 | mass% | 61.7 | 69.7 |
| | R1234yf | mass% | 12.7 | 8.5 |
| Burning velocity (WCF) | | cm/s | 8 or less | 8 or less |
| Burning velocity (WCFF) | | cm/s | 10 | 10 |

An approximate curve that connects three points was determined based on the least-squares method, as shown in the table below.

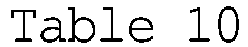

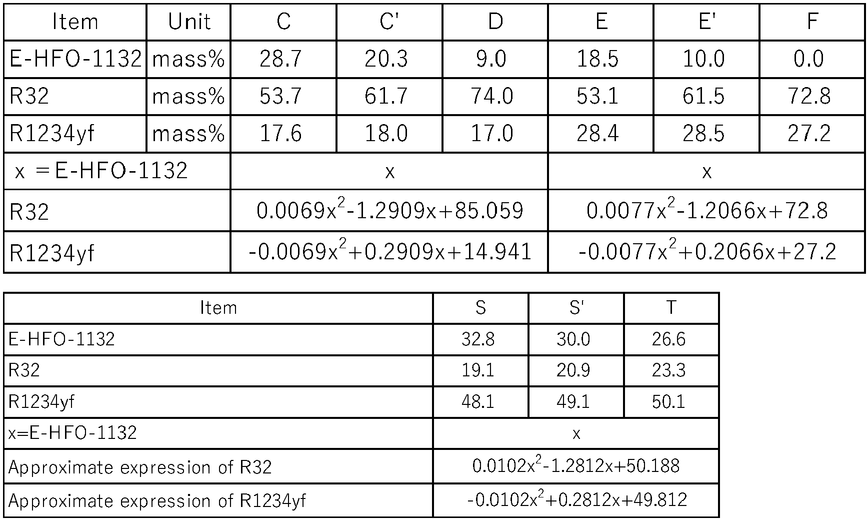

These results indicate that when a mixed refrigerant of HFO-1132(E), R32, and R1234yf satisfies the following requirements, disproportionation of HFO-1132(E) is suppressed.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines QR, RP, PO, and OQ that connect the following 4 points:
point Q (54.0, 46.0, 0.0),
point R (44.0, 0.0, 56.0),
point P (0.0, 0.0, 100.0), and
point O (0.0, 100.0, 0.0),
or on the straight line QR (excluding point Q and point R).

These results indicate that when a mixed refrigerant of HFO-1132(E), R32, and R1234yf satisfies the following requirements, disproportionation of HFO-1132(E) is suppressed; further, the refrigerant has not only a GWP of 300 or less, but also a refrigerant concentration limit (RCL) of 57 g/m³ or more, a refrigerating capacity ratio of 90% or more relative to that of R410A, and a discharge temperature increase rate of 1.5% or less.

In the refrigerant, coordinates (x,y,z) are within the range of a figure surrounded by straight lines MK, KL, LN, and NM that connect the following 4 points:
point M (19.8, 41.2, 39.0),
point K (19.8, 37.7, 42.5),
point L (12.2, 44.2, 43.6), and
point N (14.7, 44.2, 41.1),
or on the straight lines MK, KL, LN, and NM.

These results indicate that when a mixed refrigerant of HFO-1132(E), R32, and R1234yf satisfies the following requirements, not only is disproportionation of HFO-1132(E) suppressed, but also the refrigerant has a GWP of 160 or less, a refrigerant concentration limit (RCL) of 57 g/m³ or more, and a refrigerating capacity ratio of 750 or more relative to that of R410A.

In the refrigerant, coordinates (x,y,z) are within the range of a figure surrounded by straight lines I"K", K"L', and L'I" that connect the following 3 points:
point I" (19.8, 23.3, 56.9),
point K" (19.8, 17.7, 62.5), and
point L' (12.1, 23.3, 64.6)
or on the straight lines I"K", K"L', and L'I".

These results indicate that when a mixed refrigerant of HFO-1132(E), R32, and R1234yf satisfies the following requirements, not only is disproportionation of HFO-1132(E) suppressed, but also the refrigerant has a GWP of 160 or less, a refrigerant concentration limit (RCL) of 58 g/m³ or more, and a refrigerating capacity ratio of 750 or more relative to that of R410A.

In the refrigerant, coordinates (x,y,z) are within the range of a figure surrounded by straight lines I'K', K'L', and L'I' that connect the following 3 points:
point I' (18.2, 23.3, 58.5),
point K' (18.2, 18.8, 63.0), and
point L' (12.1, 23.3, 64.6)
or on the straight lines I'K', K'L', and L'I'.

When the refrigerant according to the present disclosure satisfies the following requirements, the refrigerant has not only a GWP of 500 or less, but also a refrigerating capacity ratio of 950 or more relative to that of R32, and ensures a WCF lower flammability. Additionally, disproportionation of HFO-1132(E) can be suppressed. Accordingly, a refrigerating machine can be operated without taking measures against a situation in which disproportionation occurs.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments CD, DA, AI, and IC that connect the following 4 points:
point C (28.7, 53.7, 17.6),
point D (9.0, 74.0, 17.0),
point A (26.0, 74.0, 0.0), and
point I (26.7, 73.3, 0.0),
or on the line segments CD, DA, and IC (excluding point A and point I),
the line segments DA, AI, and IC are straight lines, and
coordinates (x,y,z) of a point on the line segment CD are represented by
(x, 0.0069x²-1.2909x+85.059, -0.0069x²+0.2909x+14.941).

When the refrigerant according to the present disclosure satisfies the following requirements, the refrigerant has not only a GWP of 500 or less, but also a refrigerating capacity ratio of 950 or more relative to that of R32, and ensures a WCFF lower flammability. Additionally, disproportionation of HFO-1132(E) can be suppressed. Accordingly, a refrigerating machine can be operated without taking measures against a situation in which disproportionation occurs.

In the refrigerant, coordinates (x,y,z) are within the range of a figure surrounded by line segments C'D, DJ', and J'C' that connect the following 3 points:
point C' (20.3, 61.7, 18.0),
point D (9.0, 74.0, 17.0), and
point J' (20.0, 74.0, 6.0),
or on the line segments C'D, DJ', and J'C',
the line segments DJ', and J'C' are straight lines, and
coordinates (x,y,z) of a point on the line segment C'D are represented by
(x, 0.0069x²-1.2909x+85.059, -0.0069x²+0.2909x+14.941).

When the refrigerant according to the present disclosure satisfies the following requirements, the refrigerant has not only a GWP of 500 or less, but also a refrigerating capacity ratio of 90% or more relative to that of R32. By reducing the concentration of highly flammable E-HFO-1132E by 2%, the refrigerant ensures a WCFF lower flammability, which is highly safe. Additionally, disproportionation of HFO-1132(E) can be suppressed. Accordingly, a refrigerating machine can be operated without taking measures against a situation in which disproportionation occurs.

In the refrigerant, coordinates (x,y,z) are within the range of a figure surrounded by line segments EF, FB, BK', and K'E that connect the following 4 points:
point E (18.5, 53.1, 28.4),
point F (0.0, 72.8, 27.2),
point B (0.0, 73.9, 26.1), and
point K' (18.0, 74.0, 8.0),
or on the line segments EF, BK', and K'E (excluding point F and point B),
the line segments FB, BK', and K'E are straight lines, and coordinates (x,y,z) of a point on the line segment EF are represented by
(x, 0.0077x²-1.2066x+72.8, -0.0077x²+0.2066x+27.2).

These results indicate that when the refrigerant according to the present disclosure satisfies the following requirements, the refrigerant has a refrigerant concentration limit (RCL) of 50 g/m³ or more, a refrigerating capacity ratio of 760 or more relative to that of R32, and a GWP of 160 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines US, ST, and TU that connect the following 3 points:
point U (32.8, 23.4, 43.8),
point S (32.8, 19.1, 48.1), and
point T (26.6, 23.3, 50.1),
or on the straight lines US, ST, and TU.

These results indicate that when the refrigerant according to the present disclosure satisfies the following requirements, no measures against disproportionation are necessary, and the refrigerant has a refrigerating capacity ratio of 760 or more relative to that of R32 and a GWP of 160 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines WS', S'T, and TW that connect the following 3 points:
point W (30.0, 23.4, 46.6),
point S' (30.0, 20.9, 49.1), and
point T (26.6, 23.3, 50.1),
or on the straight lines WS', S'T, and TW.

These results indicate that when the refrigerant according to the present disclosure satisfies the following requirements, the refrigerant has an RCL of 50 g/m³ or more, a condensation glide of 4.2 K or less, and a GWP of 160 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines US, SZ, and ZU that connect the following 3 points:
point U (32.8, 23.4, 43.8),
point S (32.8, 19.1, 48.1), and
point Z (27.7, 23.4, 48.9),
or on the straight lines US, SZ, and ZU.

These results indicate that when the refrigerant according to the present disclosure satisfies the following requirements, no measures against disproportionation are necessary, and the refrigerant has a condensation glide of 4.2 K or less and a GWP of 160 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines WZ', Z'Z, and ZW that connect the following 3 points:
point W (30.0, 23.4, 46.6),
point Z' (30.0, 21.5, 48.5), and
point Z (27.7, 23.4, 48.9),
or on the straight lines WZ', Z'Z, and ZW.

These results indicate that when the refrigerant according to the present disclosure satisfies the following requirements, the refrigerant has an RCL of 50 g/m³ or more, a condensation glide of 4.2 K or less, and a GWP of 150 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines XS, SY, and YX that connect the following 3 points:
point X (32.8, 21.9, 45.3),
point S (32.8, 19.1, 48.1), and
point Y (29.5, 21.9, 48.6),
or on the straight lines XS, SY, and YX.

These results indicate that when the refrigerant according to the present disclosure satisfies the following requirements, no measures against disproportionation are necessary, and the refrigerant has an RCL of 50 g/m³ or more, a condensation glide of 4.2 K or less, and a GWP of 150 or less.

When the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines Y'Z', Z'Y, and YY' that connect the following 3 points:
point Y' (30.0, 21.9, 48.1),
point Z' (30.0,21.5,48.5), and
point Y (29.5, 21.9, 48.6),
or on the straight lines Y'Z', Z'Y, and YY'.

### Description of the Reference Numerals

1: Sample cell
2: High-speed camera
3: Xenon lamp
4: Collimating lens
5: Collimating lens
6: Ring filter

## Claims

1. A method for suppressing a disproportionation reaction of HFO-1132(E),
the method comprising operating a refrigeration cycle using a composition comprising a refrigerant, the refrigerant comprising trans-1,2-difluoroethylene (HFO-1132(E)), difluoromethane (R32), and 2,3,3,3-tetrafluoro-1-propene (R1234yf),
wherein
when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines QR, RP, PO, and OQ that connect the following 4 points:
point Q (54.0, 46.0, 0.0),
point R (44.0, 0.0, 56.0),
point P (0.0, 0.0, 100.0), and
point O (0.0, 100.0, 0.0),
or on the straight line QR (excluding point Q and point R).

2. A composition comprising a refrigerant, the refrigerant comprising HFO-1132(E), R32, and R1234yf,
wherein
when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines MK, KL, LN, and NM that connect the following 4 points:
point M (19.8, 41.2, 39.0),
point K (19.8, 37.7, 42.5),
point L (12.2, 44.2, 43.6), and
point N (14.7, 44.2, 41.1),
or on the straight lines MK, KL, LN, and NM.

3. A composition comprising a refrigerant, the refrigerant comprising HFO-1132(E), R32, and R1234yf,
wherein
when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines I"K", K"L', and L'I" that connect the following 3 points:
point I" (19.8, 23.3, 56.9),
point K" (19.8, 17.7, 62.5), and
point L' (12.1, 23.3, 64.6),
or on the straight lines I''K'', K"L', and L'I".

4. A composition comprising a refrigerant, the refrigerant comprising HFO-1132(E), R32, and R1234yf in a total amount of 99.5 mass% or more based on the entire refrigerant,
wherein
when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments CD, DA, AI, and IC that connect the following 4 points:
point C (28.7, 53.7, 17.6),
point D (9.0, 74.0, 17.0),
point A (26.0, 74.0, 0.0), and
point I (26.7, 73.3, 0.0),
or on the line segments CD, DA, and IC (excluding point A and point I),
the line segments DA, AI, and IC are straight lines, and
coordinates (x,y,z) of a point on the line segment CD are represented by
(x, 0.0069x²-1.2909x+85.059, -0.0069x²+0.2909x+14.941).

5. A composition comprising a refrigerant, the refrigerant comprising HFO-1132(E), R32, and R1234yf in a total amount of 99.5 mass% or more based on the entire refrigerant,
wherein
when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments EF, FB, BK', and K'E that connect the following 4 points:
point E (18.5, 53.1, 28.4),
point F (0.0, 72.8, 27.2),
point B (0.0, 73.9, 26.1), and
point K' (18.0, 74.0, 8.0),
or on the line segments EF, BK', and K'E (excluding point F and point B),
the line segments FB, BK', and K'E are straight lines, and
coordinates (x,y,z) of a point on the line segment EF are represented by
(x, 0.0077x²-1.2066x+72.8, -0.0077x²+0.2066x+27.2).

6. A composition comprising a refrigerant, the refrigerant comprising HFO-1132(E), R32, and R1234yf in a total amount of 99.5 mass% or more based on the entire refrigerant,
wherein
when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by straight lines US, ST, and TU that connect the following 3 points:
point U (32.8, 23.4, 43.8),
point S (32.8, 19.1, 48.1), and
point T (26.6, 23.3, 50.1),
or on the straight lines US, ST, and TU.

7. A composition comprising a refrigerant, wherein the refrigerant comprises:
HFO-1132(E), R32, and R1234yf; and
at least one additional refrigerant selected from the group consisting of acetylene, HFO-1132a, HFO-1141, HFO-1123, HFC-143a, HFC-134a, Z-HFO-1132, HFO-1243zf, HFC-245cb, HCFC-1122, HCFC-124, CFC-1113, HFC-152a, HFC-161, and 3,3,3-trifluoropropyne.

8. The composition according to any one of claims 2 to 7, wherein the refrigerant further comprises
at least one additional refrigerant selected from the group consisting of acetylene, HFO-1132a, HFO-1141, HFO-1123, HFC-143a, HFC-134a, Z-HFO-1132, HFO-1243zf, HFC-245cb, HCFC-1122, HCFC-124, CFC-1113, HFC-152a, HFC-161, and 3,3,3-trifluoropropyne.

9. The composition according to any one of claims 2 to 8, which is for use as an alternative refrigerant for R32 and/or R410A.

10. Use of the composition of any one of claims 2 to 8 as an alternative refrigerant for R32 and/or R410A.

11. A refrigerating machine comprising the composition of any one of claims 2 to 8 as a working fluid.

12. A method for operating a refrigerating machine,
comprising circulating the composition of any one of claims 2 to 8 as a working fluid in a refrigerating machine.
